# EUROPEAN PATENT SPECIFICATION

(11) **EP 4 053 252 B1**
(45) Date of publication and mention of the grant of the patent: **05.06.2024**
(21) Application number: 20883192.5
(22) Date of filing: 12.10.2020
(51) Int. Cl.: C10M 169/02, F16C 19/06, F16C 33/66, F16C 33/78, H02K 5/173, F16C 27/06, H02K 7/08, C10N 50/10, C10N 30/00, C10N 30/06, C10N 30/08, C10N 40/02, C10N 10/04

(54) **LOW-DUST GREASE COMPOSITION FOR HIGH-SPEED ROTATION, AND BEARING ENCLOSING SAME**
STAUBARME SCHMIERFETTZUSAMMENSETZUNG FÜR SCHNELLAUFENDE ROTATION UND DIESE EINSCHLIESSENDE LAGER
COMPOSITION DE GRAISSE À FAIBLE TENEUR EN POUSSIÈRE POUR UNE ROTATION À GRANDE VITESSE, ET PALIER LA CONTENANT

(30) Priority: 31.10.2019 JP 2019198807
(43) Date of publication of application: 07.09.2022
(73) Proprietor: Minebea Mitsumi Inc., Kitasaku-gun, Nagano 3890293 (JP)
(72) Inventor: ASAI, Yusuke, Kitasaku-gun, Nagano 389-0293 (JP); TAKATA, Shintaro, Kitasaku-gun, Nagano 389-0293 (JP); YAMAMOTO, Daiki, Kitasaku-gun, Nagano 389-0293 (JP)
(74) Representative: Dennemeyer & Associates S.A.
(86) International application number: PCT/JP2020/038478
(87) International publication number: WO 2021/085100

(56) References cited:
- WO-A1-2008/105377
- WO-A1-2016/158070
- WO-A1-2018/101432
- WO-A1-2018/101432
- CN-A- 101 760 284
- JP-A- 2003 343 576
- JP-A- 2009 209 990
- JP-A- 2013 087 193
- JP-B2- 4 360 166
- OTA Hiroyuki: "Development of an ultra-high speed spindle using grease-lubricated ceramic ball bearings", Report of Researches and Developments Assisted in Fiscal Year 2000, 31 December 2002 (2002-12-31), pages 29-33, XP009536347, JP

## Description

### Technical Field

The present invention relates to a grease composition, a bearing filled with the grease composition, and a motor including the bearing.

### Background Art

In the related art, a fluorine-based grease is disclosed as a grease for use in harsh conditions such as a high-temperature environment of over 180°C. To achieve high-temperature durability and low-temperature torque properties, Patent Document 1, for example, discloses a rolling bearing filled with a grease containing a fluorine oil (e.g., perfluoropolyether oil), and to the fluorine oil, a fluorine resin particle as a thickener, a predetermined aspartic ester-based rust inhibitor, and an oiliness agent are added. Further, in Patent Document 2, in consideration of cost, a grease composition containing a perfluoropolyether base oil and a predetermined carboxylic acid metal salt as a thickener is proposed.

A urea grease is a typical example of a grease used in a high-speed rotation environment (Patent Document 3). Patent Document 4 discloses a grease composition for a bearing for a high-speed motor used at a rotational speed of 50000 revolutions per minute (rpm) or greater, the grease composition including a synthetic hydrocarbon oil (base oil) mixed with a urea compound as a thickener, and a solid lubricant. Patent Document 5 discloses a grease composition containing an alkyl diphenyl ether oil and a thickener including a metal complex soap and a urea compound. The grease composition is for lubricating rolling bearings of machines used in applications exceeding 1 million dmN, where dmN is defined as the product of a pitch circle diameter ([ball bearing outside diameter in mm + ball bearing inside diameter in mm]/2) and a rotational speed in rpm. Patent Document 6 discloses grease compositions for bearings and aims to optimize bearing life. Its compositions comprise a diurea thickener, a fluorine-based thickener, an aromatic ester oil, and a perfluoropolyether oil.

### Citation List

### Patent Literature

Patent Document 1: JP 4239514 B
Patent Document 2: JP 4505954 B
Patent Document 3: JP 2015-224269 A
Patent Document 4: JP 2007-056939 A
Patent Document 5: JP 2013-087193 A
Patent Document 6: JP 4 360166 B2

### Summary of Invention

### Technical Problem

With the development of industry, a demand exists for a grease that can suppress issues such as dust generation and rotation failure of rolling bearings for use at high-speed rotations exceeding tens of thousands of rpm as well as in high-temperature environments. For example, as the rotational speed of a motor keeps increasing for the improvement of performance, a cleaner motor is intended to be used in an environment with high-speed rotations of 20000 rpm, or even over 30000 rpm. When a motor is used at such ultra-high speed rotation, dust may be generated from the grease filled in the bearings provided in the motor and mixed into the exhaust gas to contaminate the surrounding environment. Suppressing dust generation in a cleaner promoting the cleaning of the exhaust gas is one of the critical issues as well as extending the life of a motor. In addition, in the technologies drawing attention for autonomous driving such as LiDAR and polygon scanners, as there is a concern that the mirrors used during scanning in those technologies may be contaminated, suppressing dust due to the grease used in such products is required. Furthermore, the usage environment is diversifying (e.g., more cordless cleaners are adopted), and when such an equipment is used outdoors in cold regions, for example, it is conceivable that the temperature will reach around -40°C. In such cases, low torque at low temperatures will be required.

As described above, for use under a high-speed, high-temperature environment of tens of thousands of rpm or more, a demand exists for a grease having a long life but also suppressing dust generation, and also having excellent low-temperature torque characteristics.

An object of the present invention is to provide a grease composition having a low dust generation, long life, and low low-temperature torque under an ultra-high speed, high-temperature environment, and by applying such a grease composition to a rolling bearing, the rolling bearing capable of achieving a low dust generation, long life, and low low-temperature torque, and a motor including the rolling bearing are also provided.

### Solution to Problem

The invention is defined in the appended claims.

One aspect of the present invention is a grease composition containing a base oil and a thickener, the base oil including a fluorine oil, an ester oil, and a polyalphaolefin oil, and the thickener including a fluorine-based thickener, a urea-based thickener, and a barium complex soap thickener, each of these components being included in the grease composition at a predetermined proportion.

The present invention is also directed to a rolling bearing filled with the grease composition, and a motor including the rolling bearing.

### Brief Description of Drawings

FIG. 1 is a schematic view illustrating a structure of a rolling bearing according to the present invention.
FIG. 2 is a schematic view illustrating a structure of a motor according to the present invention.
FIG. 3 is a conceptual diagram illustrating a dust amount measuring device used in a dust amount test.
FIG. 4 is a conceptual diagram illustrating a high-temperature high-speed life measuring device used in a high-temperature high-speed life test.
FIG. 5 is a conceptual diagram illustrating a rotary device used in a low-temperature torque test.
FIG. 6 is a graph showing low-temperature torque test results (vertical axis) on high-speed high-temperature life test results (horizontal axis) for the grease compositions of Examples 1 to 7 and Comparative Examples 1 to 5.
FIG. 7 is a graph showing dust amount test results (vertical axis) on high-speed high-temperature life test results (horizontal axis) for the grease compositions of Examples 1 to 7 and Comparative Examples 1 to 5.
FIG. 8 is a graph showing test results of high-speed high-temperature life (vertical axis) on rotational speed (horizontal axis), according to the high-speed high-temperature life test for the grease compositions of Example 1 and Comparative Examples 1, 2 and 4.

### Description of Embodiments

As described above, for a grease composition used in a high-speed rotation, high-temperature environment with tens of thousands of rpm, or for example, at a rotational speed exceeding 30000 rpm, such a grease composition is required to have not only a long life but also few amount of dust generation. Also, by adapting to various usage environments, it is one of the required performances for the grease composition to have a low torque in a low-temperature environment.

For example, Patent Document 4 discloses a grease composition intended for usage under a rotational speed of 50000 rpm or more. However, use of particles of solid lubricants disclosed in Patent Document 4 (metal, metal nitride, metal oxide, and carbon-based particles) is not preferable due to the amount of dust generation. Also, there is no mentioning of low-temperature torque.

In addition, Patent Document 5 discloses an example of adopting a relatively large bearing having an inside diameter of 70 mm (angular contact ball bearing) as a rolling bearing for machines used in applications exceeding 1 million dmN, and rotating the relatively large bearing at an inner ring rotational speed of 13000 rpm in the example. Since a dmN value is a product of a pitch circle diameter and a rotational speed, in theory, the rotational speed increases when the diameter of a bearing is reduced for the same dmN value. Thus, the grease composition according to the present invention can be applied to rolling bearings having small diameters, that is outside diameters of 26 mm or less, and for a rolling bearing with such a small diameter, the rotational speed has to be 30000 rpm or greater. In that case, more severe conditions will apply, for there is a tendency for uneven wear and/or premature wear to occur due to the misalignment of the bearings. The unique environment associated with such an ultra-high-speed rotation will increase frictional heat and contact pressure, and thus leads to premature deterioration of a lubricating grease.

As described above, although the grease composition used in rolling bearings having a small diameter of 26 mm or less in an outside diameter under high-speed conditions of a rotational speed of 30000 rpm or greater has very stringent required performance compared with a grease composition used for large bearings having an inside diameter of 70 mm for the same dmN value, a demand itself for low dust generation as well as low low-temperature torque under such a high-speed rotation environment has not been made, nor has been suggested a grease composition that can meet such a demand.

The grease composition filled in the rolling bearing according to the present invention (hereinafter also referred to simply as "grease composition") is characterized by being blended in combination with predetermined thickeners as described later. This grease composition includes a barium complex soap thickener in addition to a fluorine-based thickener and a urea-based thickener, and achieves a long life, low dust generation, and low low-temperature torque under a high-speed rotation environment. Hereinafter, this will be described with details.

### Rolling Bearing

First, a preferred embodiment of the rolling bearing according to the present invention will be described in detail with reference to the accompanying drawings.

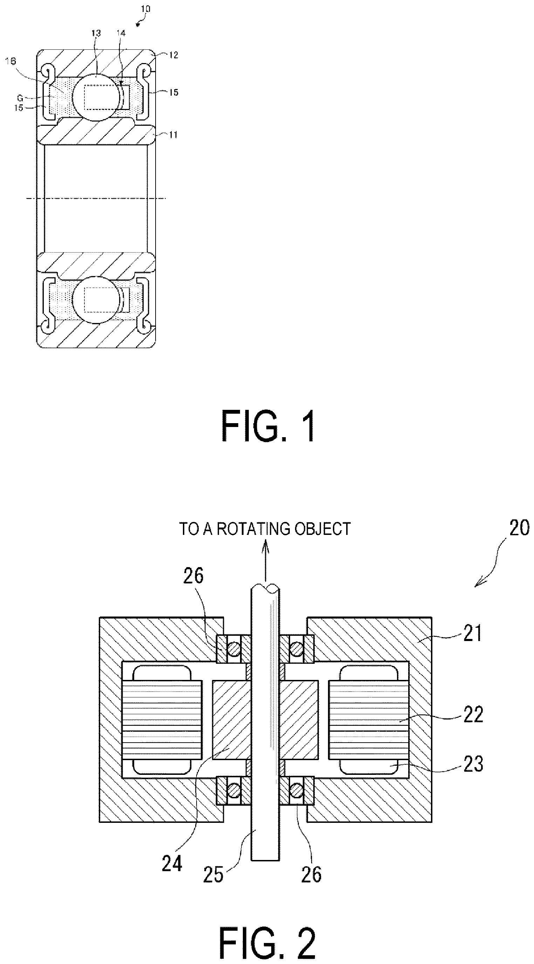

FIG. 1 is a radial cross-sectional view illustrating a rolling bearing 10 according to a preferred embodiment of the present invention. The rolling bearing 10 has a basic structure similar to a rolling bearing known in the art, and includes an annular inner ring 11 and an outer ring 12, a plurality of rolling elements 13, a retainer 14, and a sealing member 15.

The inner ring 11 is a cylindrical structure disposed coaxially with a central axis at the outer peripheral side of the shaft (not illustrated). The outer ring 12 is a cylindrical structure disposed coaxially with the inner ring 11 at the outer peripheral side of the inner ring 11. Each of the plurality of rolling elements 13 is a ball disposed in a track at an annular bearing space 16 formed between the inner ring 11 and the outer ring 12. That is, the rolling bearing 10 in the present embodiment is a ball bearing.

The retainer 14 is disposed in the track to hold the plurality of rolling elements 13. The retainer 14 is an annular body arranged coaxially with the central axis of the shaft and includes a plurality of pockets for holding the rolling elements 13 on one side in the direction of the central axis, and in each of the pockets, the rolling element 13 is located. Note that for the retainer 14, the shape (e.g., a crown shape, a waveform, etc.) and material (e.g., a steel sheet, resin, etc.) may be appropriately selected, and are not limited to a specific shape and material.

The sealing member 15 is fixed to the inner circumferential surface of the outer ring 12 and extends toward the inner ring 11 side, and seals the bearing space 16. A grease composition G is filled in the bearing space 16 sealed by the sealing member 15. The sealing member 15 is formed by, for example, a steel sheet. Note that the amount of the grease composition G filled inside the bearing space 16 is, for example, from 5 to 50% of the volume. In order to achieve both torque performance and life performance, an amount of about 25 to 35% is preferable.

In the rolling bearing 10 having the configuration described above, the grease composition G acts to reduce the friction between the rolling elements 13 and the retainer 14, and the friction between the rolling elements 13 and the inner ring 11 and the outer ring 12. As can be seen from the configuration illustrated in FIG. 1, the grease composition G filled in the rolling bearing 10 lubricates between the rolling elements 13 and the inner ring 11 or the outer ring 12 when the rolling bearing 10 rotates.

The rolling bearing according to the present invention is, in particular, a rolling bearing having an outside diameter of 26 mm or less, and is suitable for use under high-speed conditions exceeding a rotational speed of 30000 rpm.

The rolling bearing according to the present invention can be used as a rolling bearing for a small motor (e.g., a brushless motor, a fan motor) used in automobiles, home appliances, information devices, and the like.

### Motor

As an example, in FIG. 2, an embodiment directed to a motor including the rolling bearing of the present embodiment will be described in detail, however, the present invention is not limited to the following embodiment.

FIG. 2 is a cross-sectional view in the shaft direction of a motor according to an embodiment of the present invention. A motor 20 has a basic structure similar to a known motor, and includes a housing 21, a stator 22, a coil 23, a rotor magnet 24, a shaft 25, and rolling bearings 26 that support the shaft 25.

The motor 20 generates a magnetic force by passing a current supplied by a power source (not illustrated) via a drive circuit to a coil 23 wound around the stator 22, thereby rotating the rotor magnet 24, and transmitting the rotation to an external rotating object through the shaft 25.

### Grease Composition

Next, a grease composition filled in the rolling bearing according to the present invention will be described.

### Base oil

The grease composition filled in the rolling bearing according to the present embodiment uses a fluorine oil, an ester oil, and a polyalphaolefin oil. The fluorine oil is a base oil, and the ester oil and the polyalphaolefin oil are non-fluorine oils.

Examples of the fluorine oil include a fluorine oil containing a perfluoropolyether (PFPE) as a main component. The PFPE is a compound represented by a general formula: RfO(CF₂O)ₚ(C₂F₄O)_{q}(C₃F₆O)ᵣRf, where Rf is a perfluoro lower alkyl group; and p, q, and r are integers.

The perfluoropolyether is broadly classified into a linear type and a side chain type, and the linear type has a lower temperature dependence of kinematic viscosity than that of the side chain type. This means that the linear type has a lower viscosity than that of the side chain type in a low temperature environment and a higher viscosity than that of the side chain type in a high temperature environment. For example, when the use in a high temperature environment is intended, the viscosity in a high temperature environment is desirably high from the viewpoint of preventing the outflow of grease from the application site and the accompanying depletion, that is, a linear perfluoropolyether is preferably used.

The above ester oil, for example, include: diester oils, such as dibutyl sebacate, di-2-ethylhexyl sebacate, dioctyl sebacate, dioctyl adipate, diisodecyl adipate, ditridecyl adipate, ditridecyl phthalate, and methyl acetyl ricinoleate; aromatic ester oils, such as trioctyl trimellitate, tri-2-ethylhexyl trimellitate, tridecyl trimellitate, tetraoctyl pyromellitate, tetra-2-ethylhexyl pyromellitate; and polyolester oils, such as trimethylolpropane capryrate, trimethylolpropane pelargonate, pentaerythritol-2-ethylhexanoate, pentaerythritol pelargonate; and carbonate ester oil.

The blending proportion of the above fluorine oil and the non-fluorine oils (the ester oil and the polyalphaolefin oil) is not particularly limited, however, for example, it may be, relative to a total amount of 100 mass% of the base oil, from 95 to 5 mass% : from 5 to 95 mass%, or for example, from 95 to 40 mass% : from 5 to 60 mass%, where Fluorine oil : Non-fluorine oil.

In addition, the proportion of the total base oils including the fluorine oil and the non-fluorine oils relative to the total amount of the grease composition according to the invention can be from 70 to 90 mass%, for example, from 75 to 95 mass% or from 75 to 85 mass%.

### Thickener

In the grease composition according to the present invention, thickeners including a fluorine-based thickener, a urea-based thickener, and a barium complex soap thickener are added.

For these thickeners, from 9 to 18 mass% of the fluorine-based thickener, from 3.6 to 6.9 mass% of the urea-based thickener, and from 0.3 to 3.6 mass% of the barium complex soap thickener are each preferably included relative to the total amount of the grease composition.

The fluorine-based thickener, the urea-based thickener, and the barium complex soap thickener can be blended to give a total amount (total amount of the thickeners) from 10 to 30 mass%, or for example, from 15 to 20 mass%, relative to the total amount of the grease composition.

### Fluorine-based thickener

The fluorine-based thickener is preferably a fluorine resin particle, and for example, a particle of a polytetrafluoroethylene (PTFE) is preferably used. The PTFE is a polymer of tetrafluoroethylene and is represented by a general formula: [C₂F₄]ₙ, where n is a degree of polymerization.

In addition, examples of the usable fluorine-based thickener include perfluoroethylene-propylene copolymers (FEPs), ethylene-tetrafluoroethylene copolymers (ETFEs), and tetrafluoroethylene-perfluoroalkyl vinyl ether copolymers (PFAs).

The size of the PTFE particle is not particularly limited, but for example, a polytetrafluoroethylene with an average particle size from 0.5 µm to 100 µm can be used. Furthermore, the shape of the PTFE particle is not particularly limited and may be spherical, polyhedral, needle-shaped, or the like.

The fluorine-based thickener is preferably used in an amount from 9 to 18 mass% relative to the total amount of the grease composition.

### Urea-based thickener

A urea compound has excellent heat resistance, water resistance, and particularly excellent stability at high temperatures, and thus is suitably used as a thickener at an application site in high-temperature environments.

Urea compounds such as diurea compounds, triurea compounds, polyurea compounds can be used as a urea-based thickener. In particular, from the perspective of heat resistance, diurea compounds are preferably used. Examples of the type of urea compound include aliphatic-aromatic ureas and aliphatic ureas.

Known urea compounds can be used as these urea-based thickeners.

Among these, the present invention includes, as a urea-based thickener suitable for the present invention, a diurea compound represented by the following general Formula (1):

R₁-NHCONH-R₂-NHCONH-R₃ (1)

where in Formula (1) above, R₁ and R₃ each independently represent a monovalent aliphatic hydrocarbon group or a monovalent aromatic hydrocarbon group, and at least one of R₁ or R₃ is a monovalent aliphatic hydrocarbon group.
R₂ represents a divalent aromatic hydrocarbon group.

Examples of the above monovalent aliphatic hydrocarbon group include linear or branched saturated or unsaturated alkyl groups having from 6 to 26 carbon atoms.

Examples of the above aromatic hydrocarbon group include a monovalent or divalent aromatic hydrocarbon group having from 6 to 20 carbon atoms.

The urea compound for use as the urea-based thickener can be synthesized using an amine compound and an isocyanate compound.

Examples of the amine compound used here include: aliphatic amines represented by hexylamine, octylamine, dodecylamine, hexadecylamine, octadecylamine (stearylamine), behenylamine, and oleylamine; and aromatic amines represented by anilines, p-toluidine, ethoxyphenylamine, and the like.

Examples of the isocyanate compound include: aromatic diisocyanate such as phenylene diisocyanate, tolylene diisocyanate, diphenyldiisocyanate, diphenylmethane diisocyanate, and dimethylbiphenyl diisocyanate; and aliphatic diisocyanates such as octadecane diisocyanate, decane diisocyanate, hexane diisocyanate, and the like.

Note that, when an aromatic diurea compound obtained by using an aromatic monoamine as an amine raw material and an aromatic diisocyanate is used as a thickener, there may be a risk that abnormal noise may occur, and thus use of these should be avoided.

The urea-based thickener is preferably used in an amount from 3.6 to 6.9 mass% relative to the total amount of the grease composition.

### Barium complex soap thickener

In the present invention, a barium complex soap thickener is used in addition to the fluorine-based thickener and the urea-based thickener described above.

The barium complex soap thickener includes, for example, barium complex soaps of higher fatty acids and lower fatty acids, and barium complex soaps made of barium salts of dibasic acid and fatty acids, and in the present invention, a barium complex metal soap of an aliphatic dicarboxylic acid and a monoamide monocarboxylic acid can be used.

As the aliphatic dicarboxylic acid, a saturated or unsaturated dicarboxylic acid having from 2 to 20 carbon atoms is used.

Examples of the saturated dicarboxylic acid include, for example, oxalic acid, malonic acid, succinic acid, methylsuccinic acid, glutaric acid, adipic acid, pimelic acid, suberic acid, azelaic acid, sebacic acid, nonamethylene dicarboxylic acid, decamethylene dicarboxylic acid, undecane dicarboxylic acid, dodecane dicarboxylic acid, tridecane dicarboxylic acid, tetradecane dicarboxylic acid, pentadecane dicarboxylic acid, hexadecane dicarboxylic acid, heptadecane dicarboxylic acid, and octadecane dicarboxylic acid, and preferably adipic acid, pimelic acid, suberic acid, azelaic acid, sebacic acid, nonamethylene dicarboxylic acid, decamethylene dicarboxylic acid, undecane dicarboxylic acid, dodecane dicarboxylic acid, tridecane dicarboxylic acid, tetradecane dicarboxylic acid, pentadecane dicarboxylic acid, hexadecane dicarboxylic acid, heptadecane dicarboxylic acid, and octadecane dicarboxylic acid are used.

As the unsaturated dicarboxylic acid, for example, an alkenyl succinic acid, such as maleic acid, fumaric acid, 2-methylene succinic acid, 2-ethylene succinic acid, and 2-methylene glutaric acid, is used.

These saturated or unsaturated dicarboxylic acids may be used alone or in combination of two or more.

An example of the monoamide monocarboxylic acid includes the above aliphatic dicarboxylic acid with one of the carboxyl groups being amidated.

Examples of amines for amidating the carboxyl group include, for example: aliphatic primary amines such as butylamine, amylamine, hexylamine, heptylamine, octylamine, nonylamine, decylamine, laurylamine, myristylamine, palmitylamine, stearylamine, and behenylamine; aliphatic secondary amines such as dipropylamine, diisopropylamine, dibutylamine, diamylamine, dilaurylamine, monomethyl laurylamine, distearylamine, monomethyl stearylamine, dimyristylamine, and dipalmitylamine; aliphatic unsaturated amines such as allylamine, diallylamine, oleylamine, and dioleylamine; and aromatic amines such as aniline, methylaniline, ethylaniline, benzylamine, dibenzylamine, diphenylamine and α-naphthylamine.

Among these, hexylamine, heptylamine, octylamine, nonylamine, decylamine, laurylamine, myristylamine, palmitylamine, stearylamine, behenylamine, dibutylamine, diamylamine, monomethyl laurylamine, monomethyl stearylamine, oleylamine, and the like are suitably used.

For the barium complex soap thickener, a commercially available product can be suitably used.

Also, a barium complex soap can be prepared by adding an aliphatic dicarboxylic acid and a monoamide monocarboxylic acid in a polyalphaolefin oil, heating the mixture with stirring to a predetermined temperature (e.g., around 80 to 180°C), the temperature being such that the mixture can be stirred, the reaction proceeds efficiently, and the deterioration of the base oil does not occur, and then adding barium hydroxide to the mixture. The barium complex soap thus prepared may be used.

The above barium complex soap thickener can be used in an amount from 0.3 to 3.6 mass%, preferably from 0.6 to 3.6 mass%, relative to the total amount of the grease composition. When the amount of the barium complex soap thickener is below 0.3 mass%, and/or above 3.6 mass%, the high-speed high-temperature life tends to be shortened. Also, in a case of less than 0.6 mass%, the low-temperature torque tends to increase.

### Additional Additive

Furthermore, in addition to the essential components described above, the grease composition can contain an additive normally used in grease compositions as necessary within a range not impairing the effects of the present invention.

Examples of such an additive include antioxidants, extreme pressure agents, metal deactivators, anti-friction agents (wear resistant agents), rust preventives, oiliness improvers, viscosity index improvers, and thickening agents.

When these additional additives are contained, the added amount (total amount) is typically from 0.1 to 10 mass% relative to the total amount of the grease composition.

Examples of the antioxidants above include: hindered phenol-based antioxidants, such as octadecyl-3-(3,5-di-t-butyl-4-hydroxyphenyl)propionate, pentaerythritol tetrakis[3-(3,5-di-t-butyl-4-hydroxyphenyl)propionate], 2,4-bis-(n-octylthio)-6-(4-hydroxy-3,5-di-t-butylanilino)-1,3,5-triazine, 1,3,5-trimethyl-2,4,6-tris(3,5-di-t-butyl-4-hydroxybenzyl)benzene, triethylene glycol-bis[3-(3-t-butyl-5-methyl-4-hydroxyphenyl)propionate], 1,6-hexanediol-bis[3-(3,5-di-t-butyl-4-hydroxyphenyl)propionate], 2,2-thio-diethylenebis[3-(3,5-di-t-butyl-4-hydroxyphenyl)propionate], and N,N'-hexamethylenebis(3,5-di-t-butyl-4-hydroxyhydrocinnamide); phenol-based antioxidants, such as 2,6-di-t-butyl-4-methylphenol and 4,4-methylenebis(2,6-di-t-butylphenol); and amine-based antioxidants, such as diphenylamine, diarylamine, triphenylamine, phenyl-α-naphthylamine, alkylated phenyl-α-naphthylamine, phenothiazine, and alkylated phenothiazine.

Examples of the extreme pressure agents include, for example: phosphorus compounds such as phosphate esters, phosphite esters, and phosphate ester amine salts; sulfur compounds such as sulfides and disulfides; chlorine compounds such as chlorinated paraffin and chlorinated diphenyl; metal salts of sulfur compounds such as zinc dialkyldithiophosphate and molybdenum dialkyldithiocarbamate, and the like.

Examples of the metal deactivators include, for example: benzotriazole compounds such as benzotriazole, 1-[N, N-bis (2-ethylhexyl) aminomethyl]-benzotriazole, and 1-[N, N-bis (2-ethylhexyl) aminomethyl]-4-methylbenzotriazole; thiadiazole compounds such as thiadiazoles, 2-mercaptothiadiazol, 2,5-bis (alkyldithio)-1,3,4-thiadiazole; benzimidazole compounds such as benzimidazole, 2-mercaptobenzimidazole, and 2-(decyldithio) -benzimidazole; and sodium nitrite.

Furthermore, for the wear resistant agents, tricresyl phosphate and polymeric esters are included.

In addition, examples of the polymeric esters include, for example, esters of aliphatic monobasic carboxylic acids or dibasic carboxylic acids with a polyhydric alcohol. Specific examples of the polymeric esters include, but are not limited to, PRIOLUBE (trade name) product line available from Croda Japan K.K.

The grease composition of the present invention can be obtained by mixing the above various base oils with the various thickeners to give predetermined proportions, and blending the additional additive as necessary.

In addition, the grease composition can also be obtained by blending three kinds of base greases with other additives as necessary, the three kinds of base greases including: a fluorine-based grease containing a fluorine oil and a fluorine-based thickener; a urea-based grease containing an ester oil and a urea-based thickener; and a barium complex soap grease containing a polyalphaolefin oil and a barium complex soap thickener. Alternatively, the grease composition may also be prepared by blending one or two kind(s) of the above base greases and the remaining base oil and thickener, with other additives as necessary.

Typically, the content of a thickener relative to a base grease is approximately from 10 to 30 mass%, and for example, in the case of the above three kinds of base greases, the content of each thickener relative to each of the base greases can be from 15 to 30 mass% for the fluorine-based thickener, from 10 to 20 mass% for the urea-based thickener, and from 10 to 20 mass% for the barium complex soap thickener.

The invention is defined by the appended claims.

The invention is not limited to the embodiments and specific examples described in the present specification, and various modifications and variations are possible within the scope of the technical ideas described in the claims.

For example, the above embodiments and the following examples mention ball bearings as rolling bearings, but the present invention is not limited to this configuration, and the present invention does not restrict or exclude the application of the grease composition to other rolling bearings, such as roller bearings, needle bearings, conical roller bearings, spherical roller bearings, and thrust bearings, and bearing units, such as axle support bearings in automobiles.

### Examples

Hereinafter, the invention will be described in further detail with Examples. However, the invention is not limited to these Examples.

### Evaluation of Grease Composition

The grease compositions used in Examples 1 to 7 and Comparative Examples 1 to 5 were prepared with the blending amounts shown in Table 1 below.

The details and abbreviation of each component used in the preparation of the grease are as follows.
(a) Base oil
(a1) Fluorine oil: linear perfluoropolyether (PFPE)
(a2) Ester oil: ester oil
(a3) PAO: polyalphaolefin oil
(b) Thickener
(b1) Fluorine-based thickener: PTFE (polytetrafluoroethylene), particle size from 10 to 25 nm
(b2-1) Urea-based thickener: aliphatic-aromatic urea-containing urea compound
(b2-2) Urea-based thickener: urea compound containing aliphatic urea
(b3-1) Ba complex soap thickener: Barium complex soap of sebacic acid and sebacic acid monostearyl amide
(b3-2) Ca complex soap thickener: Calcium complex soap of aliphatic dicarboxylic acid and monoamide monocarboxylic acid
(b3-3) Ba soap thickener: 12OHBa soap (barium 12-hydroxy stearate)

In general, the urea-based thickener (b2-1, b2-2) is added in an amount from 10 to 20 mass% relative to the total amount of the base grease including the urea-based thickener and Ester oil (a2), and the soap-based thickener, namely Ba complex soap thickener (b3-1), Ca complex soap thickener (b3-2), Ba soap thickener (b3-3), is added in an amount from 10 to 20 mass% relative to the total amount of the base grease including the soap-based thickener and PAO (a3).

### (c) Other additive

- Antioxidant: Amine-based antioxidants
- Extreme Pressure Agents: Phosphorus extreme pressure additives

These other additives were added in such an amount to give 3 mass% in total including the above antioxidant and the extreme pressure agent, relative to a total amount of each grease composition in Examples and Comparative Examples.

The properties of the resulting grease composition were evaluated for dust amount, high-temperature high-speed life, and low temperature torque using the following procedure.

### Test Methods

### 1. Dust amount test

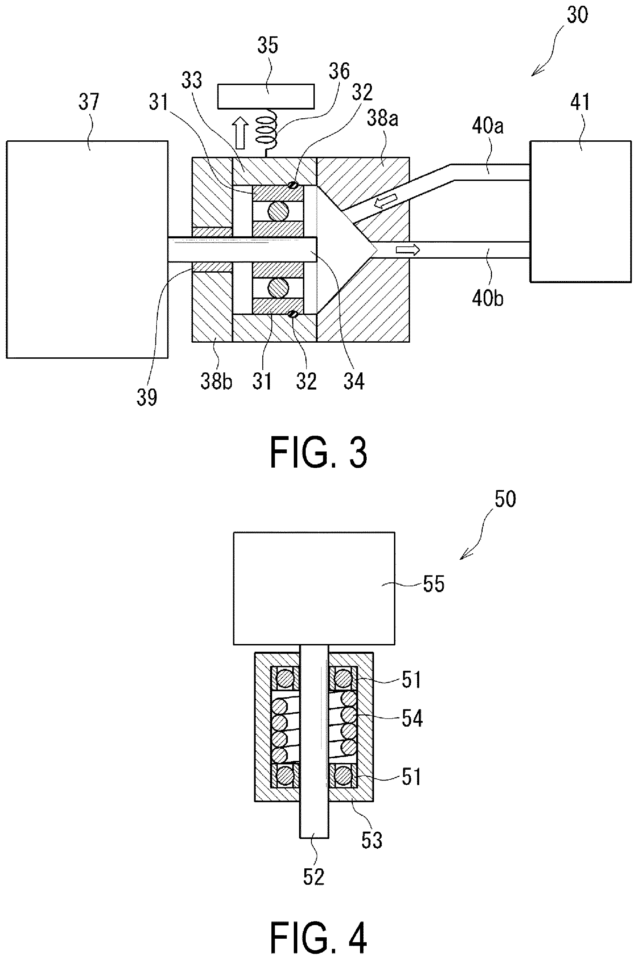

Dust amount test was performed by a dust amount measuring device 30 having a configuration illustrated in FIG. 3.

A ball bearing 31 with steel shields (inside diameter 5 mm, outside diameter 13 mm, width 4 mm) was filled with a test grease composition up to 25% to 35% of the bearing volume. The ball bearing 31 was set in a housing 33 through an O-ring 32, and then a shaft 34 was inserted to the ball bearing 31. The shaft 34 was also inserted to a bearing 39 and attached to a rear cover 38b. To an outer ring of the ball bearing 31, a preload of 19.6 N was applied in the radial direction through a load applying part 35 and a spring 36, and then an axis of rotation (not illustrated) of the test motor 37 was connected to the shaft 34 so that the ball bearing 31 was configured to rotate on the inner ring.

A front cover 38a was installed to the housing 33. At the front cover 38a, two holes were made, and one end of tubes 40 (a first tube 40a for air supply, a second tube 40b for air intake) was connected to each hole. The other end of each tube 40 was connected to a particle counter 41 (KC-01E, available from Rion Co., Ltd.), and a closed system space (room temperature) was constructed by the housing 33, the covers 38 (38a, 38b), the tubes 40 (40a, 40b), and the particle counter 41. With the ball bearing 31 rotating at 2000 rpm, airflow was circulated in the closed system space at 0.5 L/min. At this time, the outgoing airflow from the first tube 40a connected to the particle counter 41 had been filtered clean by a filter inside the particle counter 41. This allowed to measure the amount of dust generated upon rotation of the ball bearing 31 only, as no other dust or the like was able to enter from the outside into the closed system space constructed by the housing 33, the covers 38 (38a, 38b), the tubes 40 (40a, 40b), and the particle counter 41.

In the aforementioned closed system space, the number of 0.3 to 5.0 µm particles generated during the rotation of the ball bearing 31 at 2000 rpm was measured by the particle counter 41 for 50 seconds. This number of particles was converted into the number of particles per liter and was defined as the dust amount in pcs. The test greases from the Examples and Comparative Examples were tested three times each, and the average values were calculated.

### Evaluation Criteria

Under the test conditions set for the present Example, the dust amount of 1000 pcs or less was evaluated as good.
A: Dust amount of 1000 pcs or less
N: Dust amount over 1000 pcs

### 2. High-speed High-temperature Life Test

High-speed high-temperature life test was performed by a high-speed high-temperature life measuring device 50 having the configuration illustrated in FIG. 4.

Ball bearings 51 with steel shields (inside diameter 5 mm, outside diameter 13 mm, width 4 mm) were filled with a test grease composition up to 25% to 35% of the bearing volume. The ball bearings 51 were press-fitted into the shaft 52 and fixed in a housing 53. To outer rings of the ball bearings 51, a preload of 12 N was applied in the axial direction through a spring 54, and then an axis of rotation (not illustrated) of a test motor 55 was connected to the shaft 52 so that the ball bearings 51 were configured to rotate on their inner rings.

Next, the housing 53 was heated to 130°C with a heater (not illustrated), and the ball bearings 51 were rotated at a test temperature of 130°C with a rotational speed of 90000 rpm. The time it took until the ball bearings 51 stopped was measured. For the stopping condition, the vibration was measured by an amplifier unit GA-245, available from Keyence Corporation, and when the vibration reached a predetermined level, that time point was determined as the stop. The test time to the stop was set as the high-speed high-temperature life (hr). The test greases from the Examples and Comparative Examples were tested for three times each, and the average values were calculated.

### Evaluation Criteria

Under the test conditions set for the present Example, the high-speed high-temperature life of 1000 hr or longer was evaluated as good.
A: High-speed high-temperature life of 1000 hr or longer
N: High-speed high-temperature life less than 1000 hr

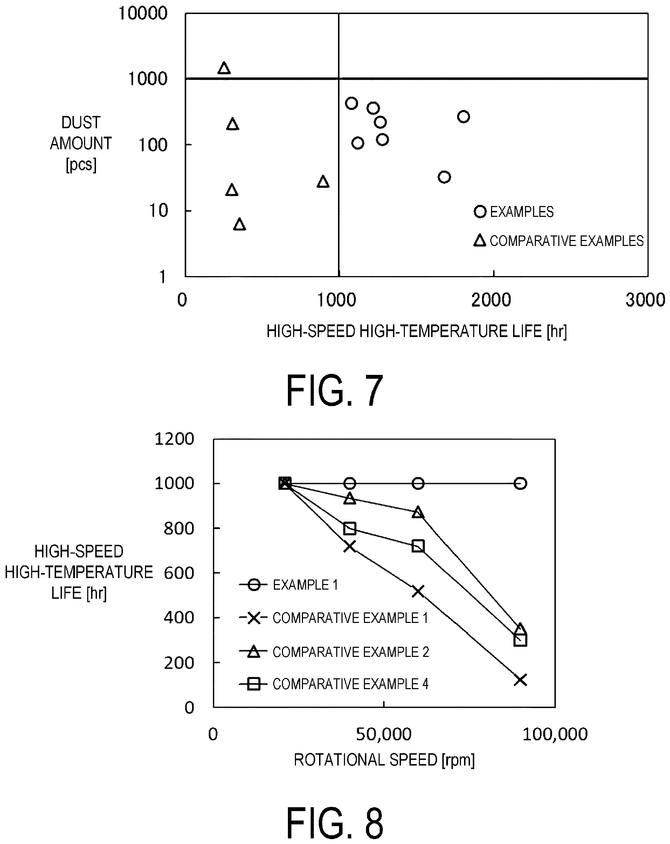

Further, as for the greases of Example 1 and Comparative Examples 1, 2 and 4, the tests were performed with the same conditions except that the rotational speed of 90000 rpm as described above was changed to 21000 rpm, 40000 rpm, and 60000 rpm, and then the average value of the high-speed high-temperature life (hr) at each rotational speed was determined. The high-speed high-temperature life results (hr) (vertical axis) on the rotational speeds (rpm) (horizontal axis) are shown in FIG. 8.

### 3. Low-temperature Torque Test

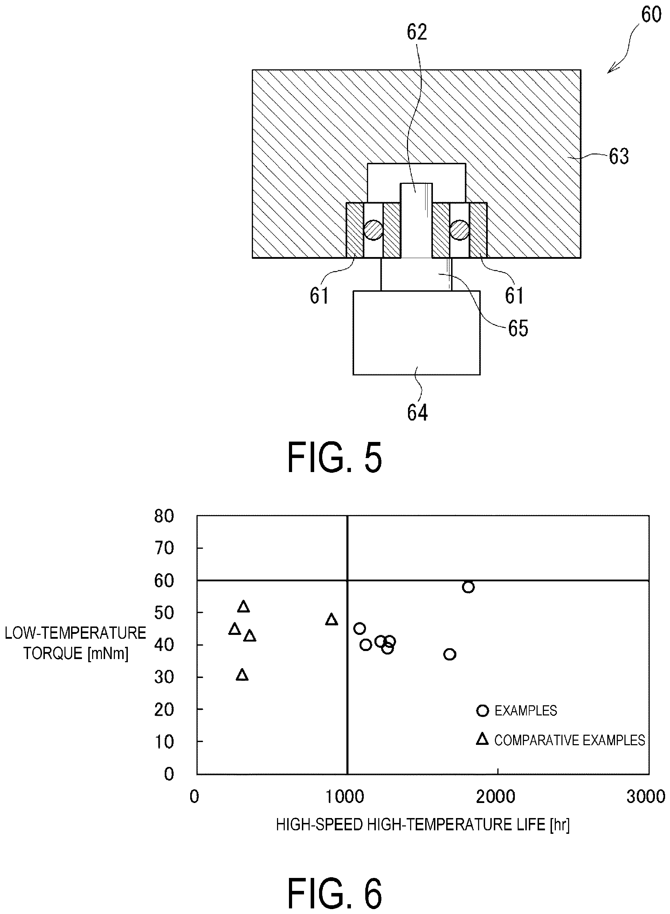

Low-temperature torque test was performed by a rotary device 60 having the configuration illustrated in FIG. 5.

A ball bearing 61 with steel shields (inside diameter 8 mm, outside diameter 22 mm, width 7 mm) was filled with a test grease composition up to 25% to 35% of the bearing volume. The ball bearing 61 was inserted to a shaft 62 of a test motor 64. To an outer ring of the ball bearing 61, a preload of 19.6 N was applied in the axial direction through a preload weight 63, and then an axis of rotation 65 of the test motor 64 was connected to the shaft 62 so that the rotary device 60 was configured to have the ball bearing 61 to rotate on the inner ring.

The rotary device 60 was set in a thermostatic chamber (not illustrated) at -40°C, and the ball bearing 61 was rotated by an external power source (not illustrated) at a rotational speed of 200 rpm, and the stress exerted on the outer ring of the ball bearing 61 to rotate due to the rotation of the test motor 64 was detected by a strain gauge (not illustrated) and converted to a rotational torque. The torque value at the onset of rotation was measured, and the maximum value was recorded as the measured value (mNm). The test greases from the Examples and Comparative Examples were tested three times each, and the average of each measured value was calculated.

### Evaluation Criteria

Under the test conditions set for the present Example, the measured torque value of 60 mNm or less was evaluated as good.
A: Measured torque value of 60 mNm or less
N: Measured torque value over 60 mNm

Results are shown in Table 1, as well as in FIG. 6 to FIG. 8. In the table, (Blending amount: mass%) is a value relative to a total amount of the composition.

**Table 1**

| (Blending amount: mass%) | | Examples | | | | | | | Comparative Examples | | | | |
|---|---|---|---|---|---|---|---|---|---|---|---|---|---|
| | | 1 | 2 | 3 | 4 | 5 | 6 | 7 | 1 | 2 | 3 | 4 | 5 |
| Base oil | (a1) Fluorine-based | 39.2 | 39.2 | 39.2 | 39.2 | 39.2 | 39.2 | 39.2 | 77.6 | 39.2 | 39.2 | 39.4 | 39.2 |
| | (a2) Ester oil | 20.4 | 26.1 | 30.6 | 37.4 | 20.4 | 37.4 | 39.1 | | 33.2 | 33.2 | 39.2 | 10.2 |
| | (a3) PAO | 20.4 | 14.7 | 10.2 | 3.4 | 20.4 | 3.4 | 1.7 | | 7.6 | 7.6 | 1.7 | 30.6 |
| Thickener | (b1) Fluorine-based | 9.8 | 9.8 | 9.8 | 9.8 | 9.8 | 9.8 | 9.8 | 19.4 | 9.8 | 9.8 | 9.8 | 9.8 |
| | (b2-1) Urea-based | 3.6 | 4.6 | 5.4 | 6.6 | | | 6.9 | | | | 6.9 | 1.8 |
| | (b2-2) Urea-based | | | | | 3.6 | 6.6 | | | 5.9 | 5.9 | | |
| | (b3-1) Ba complex soap | 3.6 | 2.6 | 1.8 | 0.6 | 3.6 | 0.6 | 0.3 | | | | | 5.4 |
| | (b3-2) Ca complex soap | | | | | | | | | 1.3 | | | |
| | (B3-3) Ba soap | | | | | | | | | | 1.3 | | |
| Additive | | 3.0 | 3.0 | 3.0 | 3.0 | 3.0 | 3.0 | 3.0 | 3.0 | 3.0 | 3.0 | 3.0 | 3.0 |
| Dust amount | Measured value (pcs) | 425 | 361 | 219 | 121 | 107 | 32 | 267 | 21 | 6.3 | 1483 | 211 | 28 |
| | Evaluation (A: ≤ 1000 pcs) | A | A | A | A | A | A | A | A | A | N | A | A |
| High-speed High-temperature Life | Lock life (hr) | 1080 | 1220 | 1264 | 1279 | 1120 | 1680 | 1802 | 300 | 350 | 250 | 308 | 895 |
| | Evaluation (A: ≥ 1000 hr) | A | A | A | A | A | A | A | N | N | N | N | N |
| | Measured value (mNm) | 45 | 41 | 39 | 41 | 40 | 37 | 58 | 31 | 43 | 45 | 52 | 48 |
| Low-temperature Torque | Evaluation (A: ≤ 60 mNm) | A | A | A | A | A | A | A | A | A | A | A | A |

| | | | |
|---|---|---|---|
| 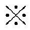 Evaluation: | Dust amount | A: Dust amount of 1000 pcs or less | N: Dust amount over 1000 pcs |
| | High-speed High- | A: High-speed high- temperature Life temperature life of 1000 hr or longer | N: High-speed high-temperature life less than 1000 hr |
| | Low-temperature | A: Measured torque Torque value of 60 mNm or less | N: Measured torque value over 60 mNm |

As shown in Table 1, the grease composition containing a fluorine-based thickener, a urea-based thickener, and a barium complex soap thickener at a predetermined proportion, that is, the grease composition including a content from 9 to 18 mass% of the fluorine-based thickener, from 3.6 to 6.9 mass% of the urea-based thickener, and from 0.3 to 3.6 mass% of the barium complex soap thickener, relative to a total amount of the grease composition, resulted in having a dust amount of 1000 pcs or less in the dust amount test (at room temperature, 2000 rpm, rotation with 19.6 N preload for 50 seconds); a life of 1000 hr or longer in the high-speed high-temperature life test (rotation at 130°C, 90000 rpm with 12 N preload); and a torque of 60 mNm or less in the low-temperature torque test (-40°C, rotation of 200 rpm at onset with 19.6 N preload), the tests being conducted using a rolling bearing with an outside diameter of 26 mm or less. Thus, the grease composition achieves all of the properties of a low dust generation, long life under high-speed rotation, and low torque performance in a low-temperature environment. Note that, since the rotational speed and the dust amount are generally in a proportional relationship, the increase in the amount of dust with the increase in the rotational speed does not depend on the composition of the grease composition. Therefore, it is conceived that the results obtained in the above dust amount test reflect the magnitude of the amount of dust at higher speed rotations.

In particular, it was confirmed that, by using the aliphatic urea (b2-2) as the urea-based thickener, a grease composition excelling in low dust generation property can be obtained (Examples 5 and 6), and by setting the blending amount of the barium complex soap thickener from 0.6 to 3.6 mass%, a grease composition having a lower torque at low temperatures can be obtained (Examples 1 to 6).

On the other hand, when only one kind of thickener (fluorine-based thickener) was blended (Comparative Example 1), the amount of dust was small and the low-temperature torque was excellent, but the life was less than 400 hr under high-speed high-temperature rotations.

Also, in the case where only two kinds of thickeners (fluorine-based thickener, urea-based thickener) were blended (Comparative Example 4), or the calcium complex soap thickener was used instead of the barium complex soap thickener (Comparative Example 2), the life in either case was less than 400 hr under high-speed high-temperature rotations.

On the other hand, when the barium soap thickener was used instead of the barium complex soap thickener (Comparative Example 3), not only the life under high-speed high-temperature rotations was shortened, but the amount of dust also increased to be greater than 1000 pcs according to the results.

Further, while the fluorine-based thickener, the urea-based thickener, and the barium complex soap thickener were blended but with the blending amount of the barium complex soap thickener being set to 5.4 mass%, an amount being out of the predetermined range from 0.3 to 3.6 mass% (Comparative Example 5), and the life under high-speed high-temperature rotations was slightly extended as compared with the other Comparative Examples, but the long life of 1000 hr, a life achieved by the grease compositions of the Examples, was not reached.

In FIG. 6 and FIG. 7, based on the results in Table 1, the test results of the low-temperature torque or the dust amount are shown on the high-speed high-temperature life test results.

FIG. 6 is a graph showing the low-temperature torque test results (mNm) (vertical axis) on the high-speed high-temperature life test results (hr) (horizontal axis). Note that, in FIG. 6, the straight line provided parallel to the horizontal axis indicates the low-temperature torque value of 60 mNm, and the straight line provided parallel to the vertical axis indicates the high-temperature high-speed life of 1000 hr. Further, in FIG. 6, the results for the grease compositions of the Examples are indicated with circles (∘) and for the grease compositions of the Comparative Examples are indicated with triangles (Δ).

FIG. 7 is a graph showing the dust amount test results (pcs) (vertical axis) on the high-speed high-temperature life test results (hr) (horizontal axis). Note that, in FIG. 7, the straight line provided parallel to the horizontal axis indicates the dust amount of 1000 pcs, and the straight line provided parallel to the vertical axis indicates the high-temperature high-speed life of 1000 hr. Further, in FIG. 7, the results for the grease compositions of the Examples are indicated with circles (∘) and for the grease compositions of the Comparative Examples are indicated with triangles (Δ).

As shown in FIG. 6 and FIG. 7, all of the grease compositions of the Examples (∘) have the high-temperature high-speed life of 1000 hr longer, and the low-temperature torque of 60 mNm or less, or the dust amount of 1000 pcs or less, while none of the grease compositions of the Comparative Examples (Δ) reach the high-temperature high-speed life of 1000 hr.

FIG. 8 is a graph showing the test results of the high-speed high-temperature life (hr) (vertical axis) on the rotational speed (rpm) (horizontal axis) according to the high-speed high-temperature life test. Signs in FIG. 8 each represent the results for the grease compositions of Example 1 (∘), Comparative Example 1 (×), Comparative Example 2 (Δ), and Comparative Example 4 (□). Note that, in the present test evaluation, as the high-temperature high-speed life of 1000 hr or longer is evaluated as optimal, the standard value for the high-temperature high-speed life is set to 1000 hr in this graph, and even when the result of 1000 hr or longer is obtained, it is indicated as 1000 hr.

As shown in FIG. 8, the grease composition of Example 1 (∘) was able to achieve a life of 1000 hr or longer regardless of the rotational speed, and even at a rotational speed of 90000 rpm or greater, a high-temperature high-speed life of 1000 hr or longer was achieved.

On the other hand, for the grease composition of Comparative Example 1 (×) using the fluorine-based thickener only, the grease composition of Comparative Example 2 (Δ) using the calcium complex soap thickener instead of the barium complex soap thickener, and the grease composition of Comparative Example 4 (□) using the fluorine-based thickener and the urea-based thickener but with no barium complex soap thickener used, all of these grease compositions resulted in the high-temperature high-speed life of less than 1000 hr when the rotational speed reached 40000 rpm or greater. In particular, the life of the grease composition of Comparative Example 1 using the fluorine-based thickener sharply dropped when the rotational speed exceeded 21000 rpm, and with the addition of the urea-based thickener, the life of the grease composition of Comparative Example 4 was slightly improved. In addition, with the calcium complex soap thickener, the life of the grease composition of Comparative Example 2 was further improved, but the life of each of these grease compositions did not reach 500 hr in the ultra-high speed rotation environment of 90000 rpm, failing to surpass the life of the grease composition of Example 1.

As is clear from the present graph, the grease composition according to the present invention was able to achieve a long life of 1000 hr, compared with the grease composition of the comparative example even at a rotational speed more than twice as much.

As described above, the grease composition according to the present invention, including the fluorine-based thickener, the urea-based thickener, and the barium complex soap thickener, was confirmed to be a grease composition having a low dust generation, long life, and low low-temperature torque under an ultra-high speed and high-temperature environment with a rotational speed exceeding 30000 rpm.

The best embodiments have been described in detail above, but the invention is not limited to the embodiments described above, and variations, modifications, and the like within a range achieving the objects of the invention are included in the invention.

### Reference Signs List

G Grease composition
10 Rolling bearing
11 Inner ring
12 Outer ring
13 Rolling element
14 Retainer
15 Sealing member
16 Bearing space
20 Motor
21 Housing
22 Stator
23 Coil
24 Rotor magnet
25 Shaft
26 Bearing

## Claims

1. A grease composition comprising a base oil and a thickener, the base oil including a fluorine oil, an ester oil, and a polyalphaolefin oil, and the thickener including a fluorine-based thickener, a urea-based thickener, and a barium complex soap thickener, the grease composition containing, relative to a total amount of the grease composition,
from 70 to 90 mass% of the fluorine oil, the ester oil, and the polyalphaolefin oil in total;
from 9 to 18 mass% of the fluorine-based thickener;
from 3.6 to 6.9 mass% of the urea-based thickener; and
from 0.3 to 3.6 mass% of the barium complex soap thickener.

2. A rolling bearing filled with the grease composition described in claim 1, the rolling bearing having an outside diameter of 26 mm or less, wherein the rolling bearing is for use under a high speed condition with a rotational speed of 30000 rpm or greater.

3. A motor comprising the rolling bearing described in claim 2.

## Patentansprüche

1. Schmierfettzusammensetzung, die ein Basisöl und ein Verdickungsmittel umfasst, wobei das Basisöl ein Fluorinöl, ein Esteröl und ein Polyalphaolefinöl beinhaltet, und das Verdickungsmittel ein fluorinbasiertes Verdickungsmittel, ein harnstoffbasiertes Verdickungsmittel und ein Bariumkomplexseife-Verdickungsmittel beinhaltet, wobei die Schmierfettzusammensetzung in Bezug auf eine Gesamtmenge der Schmierfettzusammensetzung Folgendes enthält:
von 70 bis 90 Gew.-% insgesamt von dem Fluorinöl, dem Esteröl und dem Polyalphaolefinöl;
von 9 bis 18 Gew.-% von dem fluorinbasierten Verdickungsmittel;
von 3,6 bis 6,9 Gew.-% von dem harnstoffbasierten Verdickungsmittel; und
von 0,3 bis 3,6 Gew.-% von dem Bariumkomplexseife-Verdickungsmittel.

2. Wälzlager, das mit der in Anspruch 1 beschriebenen Schmierfettzusammensetzung gefüllt ist, wobei das Wälzlager einen Außendurchmesser von 26 mm oder weniger aufweist, wobei das Wälzlager zur Verwendung unter einer Hochgeschwindigkeitsbedingung mit einer Drehgeschwindigkeit von 30000 rpm oder darüber vorgesehen ist.

3. Motor, welcher das in Anspruch 2 beschriebene Wälzlager umfasst.

## Revendications

1. Composition de graisse comprenant une huile de base et un épaississant, l'huile de base incluant une huile fluorée, une huile ester et une huile polyalphaoléfine, et l'épaississant incluant un épaississant à base de fluor, un épaississant à base d'urée et un épaississant au savon complexe de baryum, la composition de graisse contenant, par rapport à une quantité totale de la composition de graisse,
de 70 à 90 % en masse de l'huile fluorée, de l'huile ester et de l'huile polyalphaoléfine au total ;
de 9 à 18 % en masse de l'épaississant à base de fluor ;
de 3,6 à 6,9 % en masse de l'épaississant à base d'urée ; et
de 0,3 à 3,6 % en masse de l'épaississant au savon complexe de baryum.

2. Roulement rempli de la composition de graisse décrite dans la revendication 1, le roulement ayant un diamètre extérieur de 26 mm ou moins, dans lequel le roulement est destiné à être utilisé dans des conditions de vitesse élevée avec une vitesse de rotation de 30 000 trs/min ou plus.

3. Moteur comprenant le roulement décrit dans la revendication 2.
